# EUROPÄISCHE PATENTSCHRIFT

(11) **EP 2 643 616 B1**
(45) Veröffentlichungstag und Bekanntmachung des Hinweises auf die Patenterteilung: **03.08.2016**
(21) Anmeldenummer: 11776102.3
(22) Anmeldetag: 21.10.2011
(51) Int. Cl.: F16H 57/08

(54) **PLANETENRADTRÄGER, PLANETENGETRIEBE, ANLAGE UND VERWENDUNG EINER TRANSPORTÖSE ODER EINES TRANSPORTHAKENS**
PLANETARY GEAR CARRIER, PLANETARY GEAR, INSTALLATION AND USE OF A TRANSPORT EYELET OR A TRANSPORT HOOK
PORTE-SATELLITES, ENGRENAGE PLANÉTAIRE, INSTALLATION ET UTILISATION D'UN OEILLET DE TRANSPORT OU D'UN CROCHET DE TRANSPORT

(30) Priorität: 22.11.2010 DE 102010051863; 22.11.2010 DE 202010017515 U
(43) Veröffentlichungstag der Anmeldung: 02.10.2013
(73) Patentinhaber: Sew-Eurodrive GmbH & Co. KG, 76646 Bruchsal (DE)
(72) Erfinder: SZTUBA, Michael, 51145 Köln (DE); GRIMM, Andreas, 66121 Saarbrücken (DE)
(86) Internationale Anmeldenummer: PCT/EP2011/005326
(87) Internationale Veröffentlichungsnummer: WO 2012/069113

(56) Entgegenhaltungen:
- EP-A1- 1 186 804
- DE-A1- 3 330 337
- DE-A1- 19 956 789
- DE-A1-102009 042 591
- DE-U- 1 994 696
- JP-A- 2007 120 616

## Beschreibung

Die Erfindung betrifft einen Planetenradträger, ein Planetengetriebe, eine Anlage und eine Verwendung einer Transportöse oder eines Transporthakens.

Planetengetriebe mit einem Planetenradträger, an welchem eine An- oder Antriebswelle ausgebildet ist, sind bekannt. Die Funktion der An- oder Antriebswelle als eintreibende oder abtreibende Welle richtet sich nach der Verwendung des Planetengetriebes mit dem Planetenradträgers. Furiktionell werden Planetenradträger auch als Stege bezeichnet.

Zum Anschluss eines solchen Planetengetriebes ist es bekannt, an der An- oder Antriebswelle Flansche, Passfedersysteme, Klemm- und/oder Presspassungen vorzusehen.

Aus der DE 1994696 U ist eine Vorrichtung zum Lösen von Schrauben, Muttern oder dergleichen bekannt, bei welcher mehrteilige, einseitig gelagerte Planetenradträger vorhanden sind.

Aus der DE 3330337 A1 ist eine Kraftdrehvorrichtung bekannt, bei welcher ein einseitig gelagerter Planetenradträger einen Käfig aufweist, welcher von den die Planetenräder aufnehmenden Achsen und von an den Achsenenden befestigten Platten mehrteilig zusammengesetzt ist.

Aus der JP 2007120616 A ist ein Planetengetriebe mit Passfedernut bekannt, bei welchem der Planetenradträger mehrteilig aus Wangen- und Lagerbolzen der Planetenräder ist.

Aus der EP 1186804 A1 ist ein Planetenradträger für ein Planetengetriebe mit einem als Hohlwelle ausgebildeten Wellenflansch bekannt, der mit einer nahezu gleichmäßigen Wanddicke ausgebildet ist, wodurch eine gezielte Erstarrung des Rohlings nach dem Abgießen abgesichert wird.

Aus der DE 10 2009 042 591 A1 ist ein Planetenradträger nach den Merkmalen der Oberbegriffe von unabhängigen Ansprüchen 1 und 2 bekannt.

Der Erfindung liegt die Aufgabe zugrunde, ein Planetengetriebe zu schaffen, bei welchem die Montagemöglichkeit verbessert ist.

Erfindungsgemäß wird die Aufgabe bei dem Planetenradträger mit den in Anspruch 1 oder 2 angegebenen Merkmalen und bei dem Planetengetriebe mit den in Anspruch 12 angegebenen Merkmalen und bei der Verwendung nach Anspruch 14 gelöst.

Wichtige Merkmale der Erfindung eines Planetenradträgers sind in Anspruch 1 oder alternativ in Anspruch 2 angegeben. Insbesondere wird somit vorgeschlagen, dass eine An- oder Abtriebswelle vorgesehen ist, welche einen Axialabschnitt aufweist, an welchem wenigstens eine ebene, radial orientierte Fläche ausgebildet ist. Hierbei wird unter radialer Orientierung eine Ausrichtung der Fläche verstanden, bei welcher die Flächennormale der ebenen, Fläche mit einer Radialrichtung einen spitzen Winkel einschließt oder sogar mit einer Radialrichtung übereinstimmt. Die Begriffe "radial", "axiai" und "Umfang" werden in Bezug auf die durch die An- oder Abtriebswelle des Planetenradträgers vorgegebene Drehachse gebraucht. Die erfindungsgemäß ausgebildete Fläche bietet einen einfachen, belastbaren Angriffspunkt für eine formschlüssige Verbindung der An- oder Abtriebswelle mit einem weiteren Drehteil. Es lassen sich somit große Drehmomente übertragen, wodurch die Belastungsfähigkeit des Planetenradträgers und insgesamt eines Planetengetriebes, in welchem der erfindungsgemäße Planetenradträger verbaut ist, verbessert ist.

Besonders günstig für die Fertigung des Planetenradträgers ist es, wenn die Fläche parallel zu einer Axialebene und/oder parallel zu einer Achse der An- oder Abtriebswelle ausgeführt bzw. angeordnet ist.

Bei einer vorteilhaften Ausgestaltung ist vorgesehen, dass die radial orientierte Fläche in Bezug auf eine Achse der An- oder Abtriebswelle radial versetzt ausgebildet ist. Von Vorteil ist dabei, dass die Fläche somit außermittig angeordnet ist und somit einen Hebel zur Übertragung von Großdrehmomenten bereitstellt.

Bei einer vorteilhaften Ausgestaltung ist vorgesehen, dass an dem Axialabschnitt wenigstens zwei ebene, radial orientierte Flächen ausgebildet sind. Diese Flächen können in Umfangsrichtung versetzt zueinander, also mit einem Abstand voneinander, ausgebildet sein. Zwischen den Flächen kann dabei ein Übergangsbereich oder Übergang ausgebildet sein, welcher ein Zylindersegment beschreiben kann. Bei einer vorteilhaften Ausgestaltung sind hierbei die Flächen miteinander einen Winkel einschließend oder parallel zueinander ausgerichtet. Bei einer vorteilhaften Ausgestaltung sind die Flächen an einander gegenüber liegenden Seiten angeordnet.

Bei einer vorteilhaften Ausgestaltung ist vorgesehen, dass die Flächen auch in Umfangsrichtung benachbart zueinander ausgebildet sind, wobei vorzugsweise zwischen den einander benachbarten Flächen jeweils Übergänge ausgebildet sind, beispielsweise zur Erlangung einer Form, die für eine Gussfertigung geeignet ist. Zur Verbesserung der Drehmomentübertragung ist bei einer vorteilhaften Ausgestaltung vorgesehen, dass der Axialabschnitt zwei oder mehr derartige ebene, radial orientierte Flächen aufweist, die in Umfangsrichtung der An- oder Abtriebswelle voneinander beabstandet oder zueinander benachbart ausgebildet sind.

Bei einer vorteilhaften Ausgestaltung ist vorgesehen, dass der Axialabschnitt einen polygonalen Querschnitt aufweist. Von Vorteil ist dabei, dass die polygonale Querschnittsform, welche ein einhüllendes mathematisches Vieleck mit abgerundeten Ecken beschreibt, günstig für die Drehmomentübertragung bei geringer Kerbwirkung im entsprechenden Aufnahmeteil ist.

Erfindungsgemäß ist vorgesehen, dass der Axialabschnitt als Mehrkant ausgebildet ist, dessen Seitenflächen ebene, radial orientierte Flächen darstellen.

Bei einer vorteilhaften Ausgestaltung ist vorgesehen, dass der Mehrkant als Dreikant, Vierkant, Fünfkant, Sechskant oder mit anderer, vorzugsweise regelmäßiger Querschnittsform geformt ist. Die Ausbildung als Vierkant hat sich fertigungstechnisch als besonders günstig erwiesen, insbesondere auch für die entsprechend geformte Aufnahme des Axialabschnittes an dem weiteren Anschluss- oder Drehteil.

Bei einer vorteilhaften Ausgestaltung ist zur Lagerung des Planetenradträgers vorgesehen, dass zwischen einer Planetenräder aufnehmenden Planetenradaufnahme und dem Axialabschnitt ein zylindrischer erster Wellenabschnitt ausgebildet ist. Dieser Wellenabschnitt kann das Lager tragen, über welches der Planetenradträger in einem Planetengetriebe gelagert ist.

Bei einer vorteilhaften Ausgestaltung ist vorgesehen, dass die Planetenradaufnahme die Planetenräder axial einseitig trägt. Zur Übertragung großer Drehmomente hat es sich jedoch als günstig erwiesen, die Planetenradaufnahme als Käfig auszubilden. Hierbei wird unter einem Käfig eine Form verstanden, bei welcher radial orientierte Ausnehmungen ausgebildet sind, in welchen die Planetenräder angeordnet sind, wobei die Lagerung der Planetenräder jeweils axial beidseitig der Planetenräder an dem Käfig abgestützt sind.

Bei einer vorteilhaften Ausgestaltung ist vorgesehen, dass eine Planetenradaufnahme zwei axial beabstandete Wangen aufweist, welche durch axial verlaufende Verbindungsstege verbunden sind. Vorzugsweise sind die Wangen koaxial zu der An- oder Abtriebswelle angeordnet und nehmen die Planetenräder in Gebrauchsstellung zwischen sich auf. Durch die Verbindungsstege wird der Raum zwischen den Wangen in Umfangsrichtung unterteilt, wodurch Ausnehmungen zur Aufnahme der Planetenräder ausgebildet sind.

Bei einer vorteilhaften Ausgestaltung ist zur nochmaligen Verbesserung der Lagerung des Planetenradträgers in einem Planetengetriebe vorgesehen, dass axial beabstandet zu dem ersten Wellenabschnitt ein zylindrischer zweiter Wellenabschnitt ausgebildet ist. Dieser zweite Wellenabschnitt kann beispielsweise für eine zweite Lagerung verwendet werden. Der zweite Wellenabschnitt kann zusätzlich oder alternativ für Dichtmittel, beispielsweise einen Wellendichtring, verwendet werden.

Bei einer vorteilhaften Ausgestaltung ist vorgesehen, dass der zweite Wellenabschnitt an dem von dem Axialabschnitt abgewandten Axialende des Planetenradträgers ausgebildet ist. Hierdurch wird ein größtmöglicher Abstand zwischen dem Axialabschnitt und dem zweiten Wellenabschnitt erreicht. Dies ist günstig für die Krafteinleitung bei der Drehmomentübertragung vom und zum Planetenradträger.

Bei einer vorteilhaften Ausgestaltung ist vorgesehen, dass eine beziehungsweise die Planetenradaufnahme zwischen dem ersten Wellenabschnitt und dem zweiten Wellenabschnitt angeordnet ist. Von Vorteil ist dabei, dass die Planetenradaufnahme axial beidseitig in einem Planetengetriebe lagerbar ist.

Bei einer vorteilhaften Ausgestaltung ist vorgesehen, dass der erste Wellenabschnitt eine größere axiale Länge hat als der zweite Wellenabschnitt. Von Vorteil ist dabei, dass die auf den Wellenabschnitten vorgesehenen Lager unterschiedlich dimensioniert werden können. Beispielsweise kann der erste Wellenabschnitt zwischen einer Planetenradaufnahme und dem Axiatabschnitt angeordnet sein. In diesem Fall kann die Hauptbelastung der Lagerung über den größer dimensionierten ersten Wellenabschnitt aufgenommen werden.

Bei einer vorteilhaften Ausgestaltung ist vorgesehen, dass der Axialabschnitt an einem von der oder einer Planetenradaufnahme abstehenden Axialende ausgebildet ist. Somit lässt sich die axiale Gesamtlänge des Planetenradträgers optimal ausnutzen.

Bei einer vorteilhaften Ausgestaltung ist vorgesehen, dass an einer Stirnfläche der An- oder Abtriebswelle Befestigungsmittel eingebracht sind. Von Vorteil ist dabei, dass die Befestigungsmittel zur axialen Sicherung eines mit der An- oder Abtriebswelle formschlüssig verbundenen Drehteils verwendbar sind. Bei einer vorteilhaften Ausgestaltung umfassen die Befestigungsmittel wenigstens ein axial ausgerichtetes Befestigungsbohrloch. Bei einer vorteilhaften Ausgestaltung ist in dem Befestigungsbohrloch ein Gewinde ausgebildet, in welches eine Sicherungsschraube für die axiale Sicherung des Anschluss- oder Drehteils eingreift.

Bei einer vorteilhaften Ausgestaltung ist vorgesehen, dass das Befestigungsbohrloch außermittig in Bezug auf eine Achse der An- oder Abtriebswelle angeordnet ist. Eine solche Ausgestaltung hat sich für viele Anwendungsfälle als günstig erwiesen.

Bei einer vorteilhaften Ausgestaltung sind mehrere Befestigungslöcher an der Stirnfläche ausgebildet, wodurch die axiale Sicherung des Anschluss- oder Drehteils nochmals verbessert werden kann. Beispielsweise kann vorgesehen sein, dass die Befestigungsbohrlöcher in einem um die Achse der An- oder Abtriebswelle symmetrischen Bohrbild angeordnet sind. Auf diese Weise kann erreicht werden, dass das Anschluss- oder Drehteil, welches das Drehmoment ein- oder ableitet, in mehreren Orientierungen an der An- oder Abtriebswelle befestigt werden kann. Vorzugsweise stimmt hierzu die Drehsymmetrie des Bohrbildes mit der Drehsymmetrie des Mehrkants des Axialabschnittes überein.

Erfindungsgemäß ist vorgesehen, dass in der Stirnfläche mittig in Bezug auf die Achse eine Transportbohrung ausgebildet ist. Von Vorteil ist dabei, dass zum Transport des Planetenradträgers in die Transportbohrung eine Transportöse oder ein Transporthaken eingeschraubt werden kann, mit welchem der Planetenradträger angehoben, transportiert und zur Montage in das Planetengetriebe eingesetzt werden kann. Durch die mittige Anordnung entstehen während des Transports keine unerwünschten Drehmomentete Die Möglichkeit, den Planetenradträger mittels Transportöse oder Transporthaken transportieren zu können, ist besonders dann vorteilhaft, wenn der Planetenradträger zur Verwendung in einem Planetengetriebe mit einem Nennmoment von mehr als 5 kNm ausgelegt ist.

Bei einer vorteilhaften Ausgestaltung ist der Planetenradträger als Gussteil gefertigt. Insbesondere kann auf diese Weise in wenigen Fertigungsschritten die Planetenradaufnahme als Käfig gebildet werden. Auch das eingesetzte Material kann so mit geringen Verlusten ausgenutzt werden. Vorzugsweise sind hierbei die Wellenabschnitte durch Drehbearbeitung gefertigt.

Bei einer vorteilhaften Ausgestaltung ist für eine definierte Anlage eines auf den Axialabschnitt aufzusetzenden Anschluss- oder Drehteils vorgesehen, dass zwischen dem ersten Wellenabschnitt und dem Axialabschnitt eine Wellenschulter ausgebildet ist. Vorzugsweise weist der erste Wellenabschnitt einen größeren Durchmesser auf als der maximale Durchmesser des Axialabschnitts.

Zur Lösung der Aufgabe ist bei einem Planetengetriebe vorgesehen, den Planetenradträger, auch Steg genannt, erfindungsgemäß auszubilden.

Bei einer vorteilhaften Ausgestaltung ist hierbei vorgesehen, dass auf dem ersten Wellenabschnitt und/oder auf dem zweiten Wellenabschnitt ein Lager des Planetenradträgers angeordnet ist.

Bei einer vorteilhaften Ausgestaltung ist vorgesehen, dass auf dem ersten Wellenabschnitt ein Wellendichtring angeordnet ist. Von Vorteil ist dabei, dass der Wellendichtring das Innere des Planetengetriebes nach außen dicht abschließt, wobei die An- oder Abtriebswelle durch den Wellendichtring hindurchragt und der Axialabschnitt außerhalb eines Planetengetriebegehäuses angeordnet ist. Somit bietet der Axialabschnitt einen leicht zugänglichen Angriffspunkt für die Drehmomentübertragung zu einem an- oder abtreibenden Anschluss- oder Drehteil. Das Anschluss- oder Drehteil kann axial auf der An- oder Abtriebswelle gesichert sein, beispielsweise mit Schrauben oder Bolzen, welche in korrespondierende axial oder radial ausgerichtete Befestigungsbohrlöcher an der An- oder Abtriebswelle eingreifen.

Zur Lösung der genannten Aufgabe ist bei einer Anlage, umfassend ein Planetengetriebe und eine Vorrichtung mit wenigstens einem drehbar gelagerten Anschlussteil, vorgesehen, dass das Planetengetriebe erfindungsgemäß ausgebildet ist und dass das Anschlussteil mit dem Planetenradträger des Planetengetriebes drehfest lösbar verbunden ist.

Bei einer vorteilhaften Ausgestaltung ist vorgesehen, dass an dem Anschlussteil eine Aufnahme ausgebildet ist, in welcher in Gebrauchsstellung der Axialabschnitt angeordnet ist.

Bei einer vorteilhaften Ausgestaltung ist vorgesehen, dass die Aufnahme auf den Axialabschnitt aufgeschrumpft ist und/oder dass die Aufnahme und der Axialabschnitt eine Presspassung bilden. Von Vorteil ist dabei, dass eine spielfreie Drehmomentübertragung , bewirkbar ist.

Bei einer vorteilhaften Ausgestaltung ist vorgesehen, dass die Aufnahme eine Innenkontur aufweist, die auf die Außenkontur des Axialabschnitts abgestimmt ist oder dieser gleicht. Von Vorteil ist dabei, dass das Material optimal ausnutzbar ist.

Bei einer vorteilhaften Ausgestaltung ist das Anschlussteil eine Welle. Von Vorteil ist dabei, dass ein Direktanbau realisierbar ist.

Bei einer vorteilhaften Ausgestaltung ist das Anschlussteil eine Kupplung, insbesondere eine Seilkupplung. Eine Seilkupplung bietet den Vorteil, dass ein Rückschlagen des angetriebenen Stranges nicht rückübertragen wird.

Bei einer vorteilhaften Ausgestaltung weisen das Planetengetriebe und die Vorrichtung jeweils ein Gehäuse auf, wobei die Gehäuse direkt, vorzugsweise in Flanschmontage, oder indirekt, vorzugsweise über einen gemeinsamen Rahmen oder eine gemeinsame Fußplatte, miteinander verbunden sind. Somit ist eine kompakte Anlage mit in sich geschlossenem Kraftfluss bildbar.

Die Erfindung wird nun anhand eines Ausführungsbeispiels beschrieben, ist aber nicht auf dieses Ausführungsbeispiel beschränkt. Weitere Ausführungsbeispiele ergeben sich durch Kombination einzelner oder mehrerer Merkmale der Patentansprüche untereinander und/oder mit einzelnen oder mehreren Merkmalen des Ausführungsbeispiels.

Es zeigt
- Fig. 1: einen erfindungsgemäßen Planetenradträger in einer dreidimensionalen Schrägänsicht und
- Fig. 2: den Planetenradträger gemäß Fig. 1 in einer anderen räumlichen Orientierung in einer dreidimensionalen Schrägansicht.

Ein im Ganzen mit 1 bezeichneter Planetenradträger hat eine An- oder Abtriebswelle 2 zur drehfesten Verbindung des Planetenradträgers 1 mit einem weiteren Drehteil.

An der An- oder Abtriebswelle 2 ist ein Axialabschnitt 3 ausgebildet, über welchem die formschlüssige, drehfeste Verbindung mit dem nicht weiter ersichtlichen Drehteil hergestellt wird.

In dem Axialabschnitt 3 sind vier ebene Flächen 4 ausgebildet. Die Flächen 4 sind jeweils radial orientiert.

An den Flächen 4 liegen entsprechend ausgeformte Gegenflächen des Drehteils flächig an. Dadurch, dass die Flächen 4 in Bezug auf die Achse 5 der An- oder Abtriebswelle 2 und des Planetenradträgers 1 insgesamt außermittig angeordnet sind, kann somit über die Flächen 4 ein Drehmoment in die An- oder Abtriebswelle 2 eingeleitet beziehungsweise von dieser abgenommen werden.

Die vier Flächen 4 bilden einen Vierkant mit quadratischem Radialschnitt. Somit schließen jeweils in Umfangsrichtung benachbarte Flächen 4 paarweise einen rechten Winkel ein, während einander gegenüber liegende Flächen 4 parallel zueinander ausgerichtet sind.

In Umfangsrichtung zwischen den Flächen 4 sind Übergänge 6 mit einer Schräge oder mit einem Radius ausgebildet. Der Vierkant weist somit einen polygonalen Querschnitt, insbesondere Radialschnitt, auf.

An dem Planetenradträger 1 ist eine Planetenradaufnahme 7 ausgebildet.

Die Planetenradaufnahme 7 weist Ausnehmungen 8 auf, in welche die nicht weiter dargestellten Planetenräder eingesetzt sind.

Axial beidseits dieser Planetenräder sind in einem axialen Abstand zueinander Wangen 9 ausgebildet, welche durch Verbindungsstege 10 miteinander verbunden sind.

Die Wangen 9 bilden somit gemeinsam mit den axial verlaufenden Verbindungsstegen 10 einen Käfig 11, in dessen Ausnehmungen 8 die erwähnten Planetenräder aufgenommen werden.

Hierbei sind die Planetenräder auf ebenfalls nicht gezeigten, an sich bekannten Bolzen gelagert, welche in den Bolzenbohrungen 12 der Wangen 9 festgelegt sind.

Bei dem dargestellten Ausführungsbeispiel weist die Planetenradaufnahme 7 insgesamt vier in Umfangsrichtung versetzt zueinander angeordnete Ausnehmungen 8 zur Aufnahme von vier Planetenrädern auf, was zur Erzielung einer großen Laufruhe und zur Übertragung von großen Drehmomenten von Vorteil ist.

Bei weiteren Ausführungsbeispielen können auch Planetenradträger 1 zur Aufnahme von einer anderen Zahl von Planetenrädern in vorzugsweise regelmäßiger Anordnung, beispielsweise von drei Planetenrädern oder von zwei Planetenrädern, ausgebildet sein.

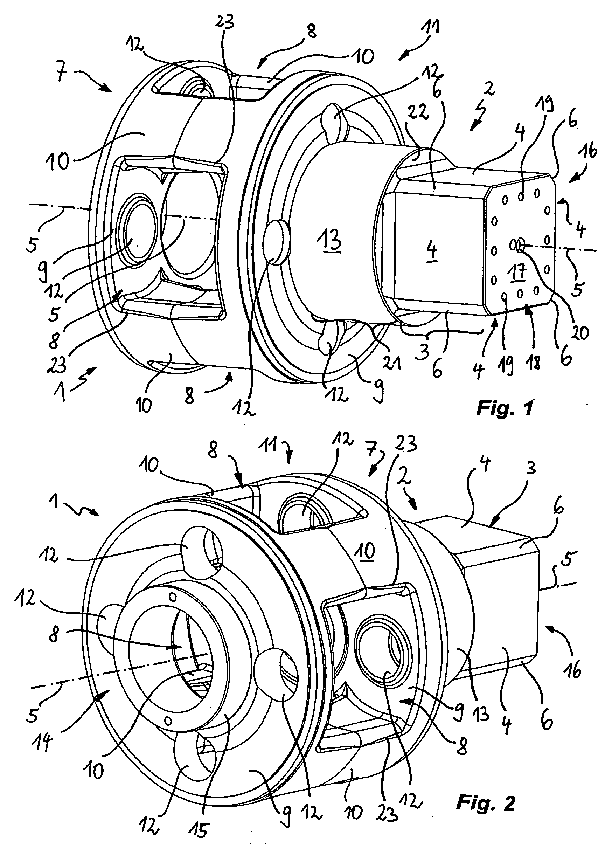

Zur Lagerung des Planetenradträgers 1 gemäß Fig. 1 und Fig. 2 in einem Planetengetriebe ist ein zylindrischer Wellenabschnitt 13 an der An- oder Abtriebswelle 2 ausgebildet. Auf diesem ersten Wellenabschnitt 13 wird ein Lager angeordnet, wenn der Planetenradträger 1 in das Planetengetriebe eingebaut wird. Der erste Wellenabschnitt 13 ist zwischen der Planetenradaufnahme 7 und dem Axialabschnitt 3 angeordnet.

Zwischen dem ersten Wellenabschnitt 13 und dem Axialabschnitt 3 ist eine Wellenschulter 22 ausgeformt. Diese Wellenschulter 22 bildet einen Anschlag für das auf den Axialabschnitt 3 aufzusetzende Anschluss- oder Drehteil.

Axial beabstandet zu dem ersten Wellenabschnitt 13 ist an dem Axialende 14, welches von dem Axialabschnitt 3 abgewandt ist, ein zweiter Wellenabschnitt 15 ausgebildet.

Die Planetenradaufnahme 7 ist somit zwischen dem ersten Wellenabschnitt 13 und dem zweiten Wellenabschnitt 15 angeordnet.

Der zweite Wellenabschnitt 15 dient ebenso wie der erste Wellenabschnitt 13 zur Aufnahme eines Lagers des Planetenradträgers 1.

Der erste Wellenabschnitt 13 hat gegenüber dem zweiten Wellenabschnitt 15 eine größere axiale Länge 21, um zusätzlich einen Wellendichtring aufzunehmen und/oder um mehr axialen Bauraum für ein verstärktes Lager zu bieten.

Aus Fig. 1 und Fig. 2 ist noch weiter ersichtlich, dass der Axialabschnitt 3 direkt oder unmittelbar an demjenigen Axialende 16 des Planetenradträgers 1 beziehungsweise der An- oder Abtriebswelle 2 ausgebildet ist, welches von der Planetenradaufnahme 7 absteht.

An der An- oder Abtriebswelle 2 ist eine Stirnfläche 17 ausgebildet. In diese Stirnfläche 17 sind Befestigungsmittel 18 in Form von axial ausgerichteten Befestigungsbohrlöchern 19 eingebracht.

Die Befestigungsbohrlöcher 19 sind außermittig in Bezug auf die Achse 5 angeordnet und bilden ein um die Achse 5 symmetrisches Bohrbild mit im Beispiel zwölf Befestigungsbohrlöchern 19.

Nachdem das bereits mehrfach erwähnte Anschluss- oder Drehteil zur Drehmomentübertragung auf den Axialabschnitt 3 aufgesetzt ist, kann das Anschluss- oder Drehteil axial gesichert werden, indem durch entsprechende Bohrungen in dem Anschluss- oder Drehteil hindurch Schrauben oder Bolzen in die Befestigungsbohrlöcher 19 eingeschraubt werden. Hierbei kann eine Sicherungsscheibe axial auf das Anschluss- oder Drehteil aufgelegt sein, durch welche die Schrauben oder Bolzen geführt sind.

In der Stirnfläche 17 ist mittig in Bezug auf die Achse 5 eine Transportbohrung 20 eingebracht. Die Transportbohrung 20 unterscheidet sich von den Befestigungsbohrlöchern 19 dadurch, dass sie einen größeren Durchmesser aufweist. In der Transportbohrung 20 ist ebenfalls ein Gewinde ausgebildet, in welches ein Transporthaken oder eine Transportöse eingeschraubt werden kann. An diesem Transporthaken beziehungsweise an dieser Transportöse kann der Planetenradträger 1 hängend transportiert und sogar - vorzugsweise mit vormontierten Planetenrädern - in ein Hohlrad von oben eingesetzt werden.

Der Planetenradträger 1 ist einstückig als Gussteil gefertigt, was insbesondere an den Gussschrägen 23 der Verbindungsstege 10 erkennbar ist.

In eingebautem Zustand in einem Planetengetriebe sind somit in den Ausnehmungen 8 die Planetenräder angeordnet, und es sind auf den Wellenabschnitten 13, 15 jeweils Lager angeordnet, wobei auf dem ersten Wellenabschnitt 13 zusätzlich ein Wellendichtring angeordnet ist.

Bei dem Planetenradträger 1 wird vorgeschlagen, an der An- oder Abtriebswelle 2 einen Axialabschnitt 3 vorzusehen, welcher zur Drehmomentübertragung wenigstens eine radial orientierte, ebene Fläche 4 aufweist.

### Bezugszeichenliste

- 1: Planetenradträger
- 2: An- oder Abtriebswelle
- 3: Axialabschnitt
- 4: Fläche
- 5: Achse
- 6: Übergang
- 7: Planetenradaufnahme
- 8: Ausnehmung
- 9: Wange
- 10: Verbindungssteg
- 11: Käfig
- 12: Bolzenbohrung
- 13: erster Wellenabschnitt
- 14: Axialende
- 15: zweiter Wellenabschnitt
- 16: Axialende
- 17: Stirnfläche
- 18: Befestigungsmittel
- 19: Befestigungsbohrloch
- 20: Transportbohrung
- 21: axiale Länge
- 22: Wellenschulter
- 23: Gussschräge

## Patentansprüche

1. Planetenradträger (1) mit einer An- oder Abtriebswelle (2),
wobei eine Planetenradaufnahme (7) zwei in Bezug auf eine durch die An- oder Abtriebswelle (2) des Ptanetenradträgers (1) vorgegebene Drehachse (5) axial beabstandete Wangen (9) aufweist, welche durch in Bezug auf die durch die An- oder Abtriebswelle (2) des Planetenradträgers (1) vorgegebene Drehachse (5) axial verlaufende Verbindungsstege (10) verbunden sind,
und der Planetenradträger (1) einstückig als Gussteil gefertigt ist
wobei
die An- oder Abtriebswelle (2) einen Axialabschnitt (3) aufweist
und der Axialabschnitt (3) als Mehrkant, dessen Seitenflächen ebene, in Bezug auf die durch die An- oder Abtriebswelle (2) des Planetenradträgers (1) vorgegebene Drehachse radial orientierte Flächen (4) darstellen, ausgebildet ist,
**dadurch gekennzeichnet, dass**
in einer Stirnfläche (17) der An- oder Abtriebswelle (2) mittig in Bezug auf die Drehachse (5) eine Transportbohrung (20) ausgebildet ist
und dass in der Transportbohrung (20) ein Gewinde ausgebildet ist,
in welches eine Transportöse oder ein Transporthaken einschraubbar ist.

2. Planetenradträger (1), mit einer An- oder Abtriebswelle (2),
wobei die An- oder Abtriebswelle (2) einen Axialabschnitt (3) aufweist,
wobei zwischen einer Planetenräder aufnehmenden Planetenradaufnahme (7) und dem Axialabschnitt (3) ein zylindrischer erster Wellenabschnitt (13), der zur Aufnahme eines Lagers des Planetenradträgers (1) verwendbar ist, ausgebildet ist
und axial beabstandet zu dem ersten Wellenabschnitt (13) ein zylindrischer zweiter Wellenabschnitt (15), der zur Aufnahme eines Lagers des Planetenradträgers (1) verwendbar ist, ausgebildet ist
und die Planetenradaufnahme (7) zwischen dem ersten Wellenabschnitt (13) und dem zweiten Wellenabschnitt (15) angeordnet ist,
so dass die Planetenradaufnahme (7) axial beidseitig in einem Planetengetriebe lagerbar ist,
wobei
der Axialabschnitt (3) als Mehrkant, dessen Seitenflächen ebene, in Bezug auf eine durch die An- oder Abtriebswelle (2) des Planetenradträgers (1) vorgegebene Drehachse (5) radial orientierte Flächen (4) darstellen, ausgebildet ist,
**dadurch gekennzeichnet, dass**
in einer Stirnfläche (17) der An- oder Abtriebswelle (2) mittig in Bezug auf die Drehachse (5) eine Transportbohrung (20) ausgebildet ist
und dass in der Transportbohrung (20) ein Gewinde ausgebildet ist,
in welches eine Transportöse oder ein Transporthaken einschraubbar ist.

3. Planetenradträger nach Anspruch 1 oder 2,
**dadurch gekennzeichnet, dass**
eine der Flächen (4) in Bezug auf die Drehachse (5) der An- oder Abtriebswelle (2) radial versetzt ausgebildet ist
und/oder
dass an dem Axialabschnitt (3) wenigstens zwei ebene, radial orientierte Flächen (4) in Umfangsrichtung versetzt zueinander und/oder in Umfangsrichtung benachbart zueinander ausgebildet sind, vorzugsweise parallel zueinander oder miteinander einen Winkel einschließend.

4. Planetenradträger nach einem der vorangegangenen Ansprüche,
**dadurch gekennzeichnet, dass**
der Axialabschnitt (3) einen polygonalen Querschnitt aufweist.

5. Planetenradträger nach Anspruch 1 oder einem der auf Anspruch 1 rückbezogenen Ansprüche 3 bis 4,
**dadurch gekennzeichnet, dass**
zwischen der Planetenräder aufnehmenden Planetenradaufnahme (7) und dem Axialabschnitt (3) ein zylindrischer erster Wellenabschnitt (13) ausgebildet ist und dass
der Axialabschnitt (3) an einem von der Planetenradaufnahme (7) abstehenden Axialende (16) ausgebildet ist.

6. Planetenradträger (1) nach Anspruch 5,
**dadurch gekennzeichnet, dass**
axial beabstandet zu dem ersten Wellenabschnitt (13) ein zylindrischer zweiter Wellenabschnitt (15) ausgebildet ist, insbesondere wobei
der zweite Wellenabschnitt (15) an einem von dem Axialabschnitt (3) abgewandten Axialende (14) ausgebildet ist.

7. Planetenradträger nach Anspruch 6,
**dadurch gekennzeichnet, dass**
die Planetenradaufnahme (7) zwischen dem ersten Wellenabschnitt (13) und dem zweiten Wellenabschnitt (15) angeordnet ist
und/oder
der erste Wellenabschnitt (13) eine größere axiale Länge (21) hat als der zweite Wellenabschnitt (15).

8. Planetenradträger nach einem der Ansprüche 5 bis 7,
**dadurch gekennzeichnet, dass**
zwischen dem ersten Wellenabschnitt (13) und dem Axialabschnitt (3) eine Wellenschulter (22) ausgebildet ist.

9. Planetenradträger nach Anspruch 2 oder einem der auf Anspruch 2 rückbezogenen Ansprüche 3 oder 4,
**dadurch gekennzeichnet, dass**
der Planetenradträger (1) als Gussteil gefertigt ist.

10. Planetenradträger nach einem der vorangegangenen Ansprüche,
**dadurch gekennzeichnet, dass**
an der Stirnfläche (17) der An- oder Abtriebswelle (2) Befestigungsmittel (18) eingebracht sind,
insbesondere wobei die Bestigungsmittel (18) wenigstens ein axial ausgerichtetes Befestigungsbohrloch (19) umfassen, insbesondere wobei
das wenigstens eine Befestigungsbohrloch (19) außermittig in Bezug auf die Drehachse (5) der An- oder Abtriebswelle (2) angeordnet ist.

11. Planetenradträger nach Anspruch 10,
**dadurch gekennzeichnet, dass**
mehrere Befestigungsbohrlöcher (19) in der Stirnfläche (17) ausgebildet sind, insbesondere in einem um die Drehachse (5) der An- oder Abtriebswelle (2) symmetrischen Bohrbild.

12. Planetengetriebe,
**dadurch gekennzeichnet, dass**
das Planetengetriebe einen Planetenradträger (1) aufweist, der nach einem der vorangegangenen Ansprüche ausgebildet ist,
insbesondere wobei der Planetenradträger nach einem der Ansprüche 2, 5 bis 8 oder einem auf Anspruch 2 rückbezogenen Anspruch ausgebildet ist und auf dem ersten Wellenabschnitt (13) ein Lager des Planetenradträgers (1) angeordnet ist
und/oder
wobei der Planetenradträger nach einem der Ansprüche 2, 6 bis 8 oder einem auf Anspruch 2 rückbezogenen Anspruch ausgebildet ist und auf dem zweiten Wettenabschnitt (15) ein Lager des Planetenradträgers (1) angeordnet ist
und/oder
wobei der Planetenradträger nach einem der Ansprüche 2, 5 bis 8 oder einem auf Anspruch 2 rückbezogenen Anspruch ausgebildet ist und auf dem ersten Wellenabschnitt (13) ein Wellendichtring angeordnet ist.

13. Anlage, umfassend ein Planetengetriebe und eine Vorrichtung mit wenigstens einem drehbar gelagerten Anschlussteil,
**dadurch gekennzeichnet, dass**
das Planetengetriebe nach dem vorangehenden Anspruch ausgebildet ist und dass das Anschlussteil mit dem Planetenradträger (1) des Planetengetriebes drehfest lösbar verbunden ist, insbesondere wobei an dem Anschlussteil eine Aufnahme ausgebildet ist, in welcher in Gebrauchsstellung der Axialabschnitt (3) angeordnet ist.

14. Verwendung einer Transportöse oder eines Transporthakens zum Transport eines Planetenradträgers (1) nach einem der Ansprüche 1 bis 11,
**dadurch gekennzeichnet, dass**
die Transportöse oder der Transporthaken in die Transportbohrung (20) des Planetenradträgers (1) eingeschraubt wird und der Planetenradträger (1) hängend an diesem Transporthaken oder dieser Transportöse transportiert wird.

15. Verwendung nach dem vorangehenden Anspruch,
**dadurch gekennzeichnet,**
**dass** der Planetenradträger (1) mit vormontierten Planetenrädern in ein Hohlrad von oben eingesetzt wird.

## Claims

1. Planetary gear carrier (1) having an input or output shaft (2),
wherein a planetary gear receptacle (7) has two cheeks (9) which are axially spaced with respect to an axis of rotation (5) predetermined by the input or output shaft (2) of the planetary gear carrier (1) and which are connected by connecting webs (10) running axially with respect to the axis of rotation (5) predetermined by the input or output shaft (2) of the planetary gear carrier (1),
and the planetary gear carrier (1) is produced in one piece as a cast part
wherein
the input or output shaft (2) has an axial portion (3) and the axial portion (3) is formed as a polygon, the side faces of which constitute plane faces (4) oriented radially with respect to the axis of rotation predetermined by the input or output shaft (2) of the planetary gear carrier (1), **characterised in that**
a transport bore (20) is formed in one end face (17) of the input or output shaft (2) centrally with respect to the axis of rotation (5)
and **in that** a thread is formed in the transport bore (20), into which thread a transport eye or a transport hook can be screwed.

2. Planetary gear carrier (1), having an input or output shaft (2),
wherein the input or output shaft (2) has an axial portion (3),
wherein a cylindrical first shaft portion (13), which is usable for receiving a bearing of the planetary gear carrier (1), is formed between a planetary gear receptacle (7) receiving planetary gears, and the axial portion (3),
and a cylindrical second shaft portion (15), which is usable for receiving a bearing of the planetary gear carrier (1), is formed axially spaced from the first shaft portion (13) and the planetary gear receptacle (7) is arranged between the first shaft portion (13) and the second shaft portion (15),
so that the planetary gear receptacle (7) is supportable axially on-both sides in a planetary gearing,
wherein
the axial portion (3) is formed as a polygon, the side faces of which constitute plane faces (4) oriented radially with respect to an axis of rotation (5) predetermined by the input or output shaft (2) of the planetary gear carrier (1), **characterised in that**
a transport bore (20) is formed in one end face (17) of the input or output shaft (2) centrally with respect to the axis of rotation (5)
and **in that** a thread is formed in the transport bore (20), into which thread a transport eye or a transport hook can be screwed.

3. Planetary gear carrier according to claim 1 or 2,
**characterised in that**
one of the faces (4) is formed radially offset with respect to
the axis of rotation (5) of the input or output shaft (2) and/or
**in that** on the axial portion (3) at least two plane, radially oriented faces (4) are formed offset from one another in the circumferential direction and/or are formed adjacently to one another in the circumferential direction, preferably parallel to one another or enclosing an angle with one another.

4. Planetary gear carrier according to one of the preceding claims,
**characterised in that**
the axial portion (3) has a polygonal cross-section.

5. Planetary gear carrier according to claim 1 or to one of claims 3 to 4 referring back to claim 1,
**characterised in that**
a cylindrical first shaft portion (13) is formed between the planetary gear receptacle (7) receiving planetary gears, and
the axial portion (3)
and **in that**
the axial portion (3) is formed at one axial end projecting from the planetary gear receptacle (7).

6. Planetary gear carrier (1) according to claim 5,
**characterised in that**
a cylindrical second shaft portion (15) is formed axially spaced from the first shaft portion (13), in particular
wherein
the second shaft portion (15) is formed at an axial end (14) facing away from the axial portion (3).

7. Planetary gear carrier according to claim 6,
**characterised in that**
the planetary gear receptacle (7) is arranged between the first shaft portion (13) and the second shaft portion (15) and/or
the first shaft portion (13) has a greater axial length (21) than the second shaft portion (15).

8. Planetary gear carrier according to one of claims 5 to 7,
**characterised in that**
a shaft shoulder (22) is formed between the first shaft portion (13) and the axial portion (3).

9. Planetary gear carrier according to claim 2 or to one of claims 3 to 4 referring back to claim 2,
**characterised in that**
the planetary gear carrier (1) is produced as a cast part.

10. Planetary gear carrier according to one of the preceding claims,
**characterised in that**
fastening means (18) are incorporated at the end face (17) of the input or output shaft (2),
in particular wherein the fastening means (18) comprise at least one axially oriented fastening borehole (19), in particular wherein
the at least one fastening borehole (19) is arranged eccentrically with respect to the axis of rotation (5) of the input or output shaft (2).

11. Planetary gear carrier according to claim 10,
**characterised in that**
a plurality of fastening boreholes (19) are formed in the end face (17), in particular in a bore pattern symmetrical about the axis of rotation (5) of the input or output shaft (2).

12. Planetary gearing,
**characterised in that**
the planetary gearing has a planetary gear carrier (1) which is formed according one of the preceding claims,
in particular wherein the planetary gear carrier is formed according to one of claims 2, 5 to 8 or a claim referring back to claim 2 and a bearing of the planetary gear carrier (1) is arranged on the first shaft portion (13)
and/or
wherein the planetary gear carrier is formed according to one of claims 2, 6 to 8 or a claim referring back to claim 2 and a bearing of the planetary gear carrier (1) is arranged on the second shaft portion (15)
and/or
wherein the planetary gear carrier is formed according to one of claims 2, 5 to 8 or a claim referring back to claim 2 and a shaft sealing ring is arranged on the first shaft portion (13).

13. System, comprising a planetary gearing and a device having at least one rotatably mounted connection part,
**characterised in that**
the planetary gearing is formed according to the preceding claim
and **in that** the connection part is detachably connected in a rotationally fixed manner to the planetary gear carrier (1) of the planetary gearing, in particular wherein a receptacle is formed on the connection part, in which receptacle the axial portion (3) is arranged in the use position.

14. Use of a transport eye or a transport hook for transporting a planetary gear carrier (1) according to one of claims 1 to 11,
**characterised in that**
the transport eye or the transport hook is screwed into the transport bore (20) of the planetary gear carrier (1) and the planetary gear carrier (1) is transported suspended on this transport hook or this transport eye.

15. Use according to the preceding claim,
**characterised in that**
the planetary gear carrier (1) with preassembled planetary gears is inserted into a ring gear from above.

## Revendications

1. Porte-satellites (1) avec un arbre menant ou mené (2),
sachant qu'un support de porte-satellites (7) présente deux joues (9) axialement distantes par rapport à un axe de rotation (5) prédéfni par l'arbre menant ou mené (2) du porte-satellites (1), joues qui sont reliées par des entretoises de liaison (10) s'étendant axialement par rapport à l'axe de rotation (5) prédéfini par l'arbre menant ou mené (2) du porte-satellites (1),
et que le porte-satellites (1) est fabriqué d'un seul tenant sous la forme d'une pièce moulée en fonte,
sachant que l'arbre menant ou mené (2) présente une partie axiale (3),
et que la partie axiale (3) est réalisée sous la forme d'un multipans, dont les faces latérales constituent des surfaces planes (4) orientées radialement par rapport à l'axe de rotation prédéfini par l'arbre menant ou mené (2) du porte-satellites (1),
**caractérisé en ce qu'**un perçage de transport (20) est formé centralement par rapport à l'axe de rotation (5) dans une face frontale (17) de l'arbre menant ou mené (2),
et **en ce qu'**un filetage est formé dans le perçage de transport (20), filetage dans lequel peut être vissé un oeillet de transport ou un crochet de transport.

2. Porte-satellites (1) avec un arbre menant ou mené (2),
sachant que l'arbre menant ou mené (2) présente une partie axiale (3),
sachant qu'une première partie d'arbre cylindrique (13), qui peut être utilisée pour recevoir un palier du porte-satellites (1), est formée entre la partie axiale (3) et un support de porte-satellites (7) recevant le porte-satellites,
et qu'une deuxième partie d'arbre cylindrique (15), qui peut être utilisée pour recevoir un palier du porte-satellites (1), est formée axialement à distance de la première partie d'arbre (13),
et que le support de porte-satellites (7) est disposé entre la première partie d'arbre (13) et la deuxième partie d'arbre (15),
de sorte que le support de porte-satellites (7) peut être supporté axialement de part et d'autre dans un engrenage planétaire,
sachant que la partie axiale (3) est réalisée sous la forme d'un multipans, dont les faces latérales constituent des surfaces planes (4) orientées radialement par rapport à un axe de rotation (5) prédéfini par l'arbre menant ou mené (2) du porte-satellites (1),
**caractérisé en ce qu'**un perçage de transport (20) est formé centralement par rapport à l'axe de rotation (5) dans une face frontale (17) de l'arbre menant ou mené (2),
et **en ce qu'**un filetage est formé dans le perçage de transport (20), filetage dans lequel peut être vissé un oeillet de transport ou un crochet de transport.

3. Porte-satellites selon la revendication 1 ou 2, **caractérisé en ce qu'**une des surfaces (4) est réalisée radialement décalée par rapport à l'axe de rotation (5) de l'arbre menant ou mené (2),
et/ou **en ce qu'**au moins deux surfaces planes (4) orientées radialement sont formées sur la partie axiale (3) en étant mutuellement décalées en direction périphérique et/ou mutuellement voisines en direction périphérique, de préférence parallèlement entre elles ou en formant un angle entre elles.

4. Porte-satellites selon l'une des revendications précédentes, **caractérisé en ce que** la partie axiale (3) présente une section polygonale.

5. Porte-satellites selon la revendication 1 ou l'une des revendications 3 à 4 en référence à la revendication 1, **caractérisé en ce qu'**une première partie d'arbre cylindrique (13) est formée entre la partie axiale (3) et le support de porte-satellites (7) recevant le porte-satellites,
et **en ce que** la partie axiale (3) est formée à une extrémité axiale (16) dépassant du support de porte-satellites (7).

6. Porte-satellites selon la revendication 5, **caractérisé en ce qu'**une deuxième partie d'arbre cylindrique (15) est formée axialement à distance de la première partie d'arbre (13),
sachant notamment que la deuxième partie d'arbre (15) est formée à une extrémité axiale (14) éloignée de la partie axiale (3)

7. Porte-satellites selon la revendication 6, **caractérisé en ce que**
le support de porte-satellites (7) est disposé entre la première partie d'arbre (13) et la deuxième partie d'arbre (15),
et/ou la première partie d'arbre (13) possède une plus grande longueur axiale (21) que la deuxième partie d'arbre (15).

8. Porte-satellites selon l'une des revendications 5 à 7, **caractérisé en ce qu'**un épaulement d'arbre (22) est formé entre la première partie d'arbre (13) et la partie axiale (3).

9. Porte-satellites selon la revendication 2 ou l'une des revendications 3 à 4 en référence à la revendication 2, **caractérisé en ce que** le porte-satellites (1) est fabriqué sous la forme d'une pièce moulée en fonte.

10. Porte-satellites selon l'une des revendications précédentes, **caractérisé en ce que** des moyens de fixation (18) sont mis en place sur la face frontale (17) de l'arbre menant ou mené (2),
sachant notamment que les moyens de fixation (18) comprennent au moins une forure de fixation (19) orientée axialement,
sachant notamment que la forure de fixation (19) au moins unique est disposée excentrée par rapport à l'axe de rotation (5) de l'arbre menant ou mené (2).

11. Porte-satellites selon la revendication 10, **caractérisé en ce que** plusieurs forures de fixation (19) sont formées dans la face frontale (17), en particulier suivant une trame de trous symétrique autour de l'axe de rotation (5) de l'arbre menant ou mené (2).

12. Engrenage planétaire, **caractérisé en ce que** l'engrenage planétaire présente un porte-satellites (1) qui est configuré selon l'une des revendications précédentes,
sachant notamment que le porte-satellites est configuré selon l'une des revendications 2, 5 à 8 ou une revendication se référant à la revendication 2, et qu'un palier du porte-satellites (1) est disposé sur la première partie d'arbre (13),
et/ou sachant que le porte-satellites est configuré selon l'une des revendications 2, 6 à 8 ou une revendication se référant à la revendication 2, et qu'un palier du porte-satellites (1) est disposé sur la deuxième partie d'arbre (15),
et/ou sachant que le porte-satellites est configuré selon l'une des revendications 2, 5 à 8 ou une revendication se référant à la revendication 2, et qu'une bague d'étanchéité d'arbre est disposée sur la première partie d'arbre (13).

13. Système comprenant un engrenage planétaire et un dispositif pourvu d'au moins un élément de raccordement monté à rotation,
**caractérisé en ce que** l'engrenage planétaire est configuré selon la revendication précédente,
et **en ce que** l'élément de raccordement est relié de manière amovible en solidarité de rotation au porte-satellites (1) de l'engrenage planétaire, sachant notamment qu'un support, dans lequel est disposée la partie axiale (3) en position d'utilisation, est formé sur l'élément de raccordement.

14. Utilisation d'un oeillet de transport ou d'un crochet de transport pour le transport d'un porte-satellites (1) selon l'une des revendications 1 à 11,
**caractérisée en ce que** l'oeillet de transport ou le crochet de transport est vissé dans le perçage de transport (20) du porte-satellites (1), et le porte-satellites (1) est transporté accroché à cet oeillet de transport ou ce crochet de transport

15. Utilisation selon la revendication précédente, **caractérisé en ce que** le porte-satellites (1), avec des satellites préassemblés, est inséré par le haut dans une couronne.
